# EUROPEAN PATENT APPLICATION

(11) **EP 4 641 856 A1**
(43) Date of publication of application: **29.10.2025**
(21) Application number: 23905162.6
(22) Date of filing: 07.06.2023
(51) Int. Cl.: H02H 3/00

(54) **BATTERY SYSTEM AND POWER SUPPLY SYSTEM**

(30) Priority: 22.12.2022 CN 202223525697 U
(71) Applicant: Sungrow Power Supply Co., Ltd., Hefei, Anhui 230088 (CN)
(72) Inventor: CHEN, Qiangdong, Hefei, Anhui 230088 (CN); DONG, Wengong, Hefei, Anhui 230088 (CN); LI, Xuteng, Hefei, Anhui 230088 (CN)
(74) Representative: Prinz & Partner mbB
(86) International application number: PCT/CN2023/098755
(87) International publication number: WO 2024/130973

(57) **Abstract**

The present application discloses a battery system and a power supply system. The battery system comprises a processing circuit, a constant current source and a plurality of battery packs; each battery pack comprises at least one sampling resistor; the sampling resistors of all the battery packs are connected in series across the constant current source; voltages across the constant current source can directly reflect corresponding voltage protection values when different numbers of battery packs are connected in series; the processing circuit is connected across the constant current source, and uses the voltage across the constant current source as a voltage protection value to compare same with a voltage after the plurality of battery packs are connected in series. According to the battery system provided by the present application, the voltage protection value is directly represented by means of the voltage across the constant current source, and there is no need for an installation worker to open a switch box on site to adjust the voltage protection value by means of a **DIP** switch, thereby achieving convenience and rapidness, improving the safety, and reducing personnel costs.

## Description

The present application claims priority to Chinese Patent Application No.202223525697.3, titled "BATTERY SYSTEM AND POWER SUPPLY SYSTEM", filed on December 22, 2022 with the China National Intellectual Property Administration, which is incorporated herein by reference in its entirety.

### FIELD

The present disclosure relates to the technical field of energy storage, and in particular to a battery system and a power supply system.

### BACKGROUND

At present, energy storage systems are mainly used in several application scenarios such as, residential use, industrial and commercial use, or station use. Residential battery systems are used for residential energy storage. The residential battery systems are different in capacities which are adapted to varying resident needs. Hence, the residential battery system generally includes battery modules connected in series, in order to meet the different capacities. The main problem resulting from multiple battery modules connected in series is that a protection value of the battery system is determined only after the number of battery modules is determined by user on site.

A commonly used method for setting the protection value of the residential battery system is setting the protection value by using a dual in-line package (DIP) switch, that is, setting, by using the DIP switch, the protection value corresponding to the number of battery modules determined by user on site. However, during setting the corresponding protection value by using the DIP switch on site, a switch box is disassembled and assembled, which is inconvenient, prolongs installation time, and places high demands on installers.

### SUMMARY

In view of this, a battery system and a power supply system are provided according to the present disclosure, to quickly set a protection value of the battery system.

To solve the above problem, the following technical solutions are provided according to the embodiments of the present disclosure.

A battery system is provided according to the embodiments of the present disclosure, and includes a processing circuit, a constant current source, and multiple battery packs. Each of the multiple battery packs includes at least one sense resistor. The sense resistors of the multiple battery packs are connected in series to form a branch and the branch is connected to two terminals of the constant current source. The processing circuit is connected to the two terminals of the constant current source, and is configured to acquire a voltage between the two terminals of the constant current source as a voltage protection value.

In an embodiment, the battery system further includes a controller connected to the constant current source. The controller is configured to regulate a current supplied by the constant current source.

In an embodiment, the constant current source includes a first constant current source. Each of the multiple battery packs includes a first sense resistor; and the first sense resistors of the multiple battery packs are connected in series to form a branch and the branch is connected to two terminals of the first constant current source.

In an embodiment, the processing circuit is connected to the first constant current source, and is configured to acquire a voltage between the two terminals of the first constant current source as an overvoltage protection value; and compare the acquired voltage with a voltage of the multiple battery packs connected in series.

In an embodiment, the battery system further includes a battery cluster voltage sampling circuit and an overvoltage comparator. Input terminals of the battery cluster voltage sampling circuit are connected to two terminals of the multiple battery packs connected in series, respectively, and an output terminal of the battery cluster voltage sampling circuit is connected to a first input terminal of the overvoltage comparator. A second input terminal of the overvoltage comparator is connected to the processing circuit.

In an embodiment, the processing circuit is connected to the first constant current source, and is configured to: acquire a voltage between the two terminals of the first constant current source as an undervoltage protection value; and compare the acquired voltage with a voltage of the multiple battery packs connected in series.

In an embodiment, the battery system further includes a battery cluster voltage sampling circuit and an undervoltage comparator. Input terminals of the battery cluster voltage sampling circuit are connected to the two terminals of the multiple battery packs connected in series, respectively, and an output terminal of the battery cluster voltage sampling circuit is connected to a first input terminal of the undervoltage comparator. A second input terminal of the undervoltage comparator is connected to the processing circuit.

In an embodiment, the constant current source further includes a second constant current source. Each of the multiple battery packs further includes a second sense resistor. The second sense resistors of the multiple battery packs are connected in series to form a branch and the branch is connected to two terminals of the second constant current source. The processing circuit is connected to the second constant current source, and is further configured to: acquire a voltage between the two terminals of the second constant current source as an undervoltage protection value; and compare the acquired voltage with the voltage of the multiple battery packs connected in series.

In an embodiment, the battery system further includes an undervoltage comparator. The output terminal of the battery cluster voltage sampling circuit is connected to a first input terminal of the undervoltage comparator; and a second input terminal of the undervoltage comparator is connected to the processing circuit.

A power supply system is further provided according to the present disclosure, and includes a converter and the battery system described above. The converter is configured to charge and discharge the battery system.

Therefore, the present disclosure has the following beneficial effects.

The battery system according to the present disclosure includes a processing circuit, a constant current source, and multiple battery packs. Each of the multiple battery pack includes at least one sense resistor, and the sense resistors of the multiple battery packs are connected in series to form a branch and the branch is connected to the two terminals of the constant current source, and thus the number of sense resistors connected in series varies with the number of battery packs. Additionally, a resistance value of the sense resistor and a current supplied by the constant current source together represent a voltage protection value corresponding to one battery pack. Thus, the voltage of the two terminals of the constant current source directly reflects the voltage protection value corresponding to a certain number of battery packs connected in series. The processing circuit is connected to the two terminals of the constant current source, acquires the voltage of the two terminals of the constant current source as the voltage protection value, and compare the acquired voltage with the voltage of the multiple battery packs connected in series. In the battery system according to the present disclosure, the voltage of the two terminals of the constant current source directly represents the voltage protection value, and thus it is unnecessary for installers to open a switch box and to adjust the voltage protection value by using a DIP switch on site, which is more convenient and quicker, thereby improving safety and reducing labor costs.

### BRIEF DESCRIPTION OF THE DRAWINGS

FIG. 1 is a schematic diagram of a battery system according to an embodiment of the present disclosure;
FIG. 2 is a schematic diagram of a battery system according to another embodiment of the present disclosure; and
FIG. 3 is a schematic diagram of a power supply system according to an embodiment of the present disclosure.

### DETAILED DESCRIPTION

In order to make the above objectives, features and advantages of the present disclosure more apparent and understandable, the embodiments of the present disclosure are described in detail below in conjunction with the drawings and specific examples.

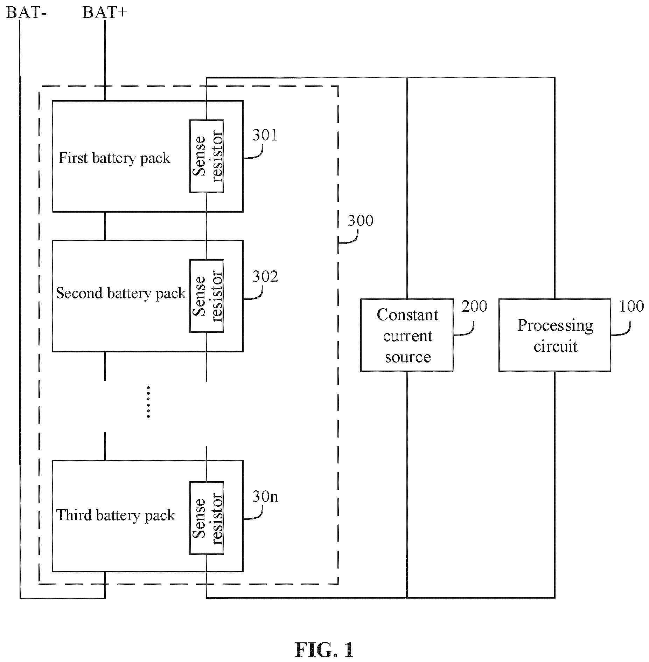

Referring to FIG. 1, FIG. 1 is a schematic diagram of a battery system according to an embodiment of the present disclosure.

The battery system according to the embodiment of the present disclosure includes a processing circuit 100, a constant current source 200, and multiple battery packs 300. The multiple battery packs include a first battery pack 301, a second battery pack 302, and up to an n-th battery pack 30n.

Each battery pack includes at least one sense resistor.

The sense resistors of all the battery packs are connected in series to form a branch, and the branch is connected to two terminals of the constant current source 200.

All the battery packs are connected in series to form a branch, and a terminal of the branch serves as a positive electrode BAT+ of the battery system and the other terminal of the branch serves as a negative electrode BAT- of the battery system.

The processing circuit 100 is connected to the two terminals of the constant current source 200, acquires a voltage between the two terminals of the constant current source 200 as a voltage protection value, and compares the acquired voltage with a voltage of the multiple battery packs connected in series.

A resistance value of the sense resistor and a current supplied by the constant current source are not limited in the present disclosure, as long as a product of the resistance value of the sense resistor in each battery pack and the current supplied by the constant current source can represent a voltage protection value corresponding to one battery pack.

The function of the voltage protection value is not limited in the present disclosure. In an embodiment, the voltage protection value may serve as an overvoltage protection value, an undervoltage protection value, or another protection value unmentioned herein. The resistance value of the sense resistor and/or the current supplied by the constant current source are modified by those skilled in the art to acquire different voltage protection values as required.

The sense resistor is arranged in the battery pack. In an embodiment, the sense resistor is arranged in an acquisition board in the battery pack or a series in the battery pack, which is not limited in the present disclosure.

The number of the sense resistors connected in series varies with the number of the battery packs, and thus the voltage across the constant current source varies accordingly.

The voltage across the constant current source acquired by the processing circuit 100 directly represents the voltage protection value corresponding to a certain number of battery packs connected in series, and thus it is unnecessary to open a switch box and to set the voltage protection value by using a DIP switch.

The battery system according to the embodiments of the present disclosure includes a processing circuit, a constant current source, and multiple battery packs. Each of the multiple battery pack includes at least one sense resistor, and the sense resistors of the multiple battery packs are connected in series to form a branch and the branch is connected to the two terminals of the constant current source, and thus the number of sense resistors connected in series varies with the number of battery packs. Additionally, a resistance value of the sense resistor and a current supplied by the constant current source together represent a voltage protection value corresponding to one battery pack. Thus, the voltage of the two terminals of the constant current source directly reflects the voltage protection value corresponding to a certain number of battery packs connected in series. The processing circuit acquires the voltage of the two terminals of the constant current source as the voltage protection value, and compares the acquired voltage with the voltage of the multiple battery packs connected in series. In the battery system provided according to the embodiments of the present disclosure, the voltage of the two terminals of the constant current source directly represents the voltage protection value, and thus it is unnecessary for installers to open a switch box and to adjust the voltage protection value by using a DIP switch on site, which is more convenient and quicker, thereby improving safety and reducing labor costs.

In some embodiments, the battery system may further include a controller. The controller is configured to regulate the current supplied by the constant current source to regulate the voltage protection value as required.

The number of the constant current source and the number of the sense resistor in each battery pack are not limited in the present disclosure. Hereinafter, an implementation is described with an example that the battery system includes two constant current sources and each battery pack includes two sense resistors.

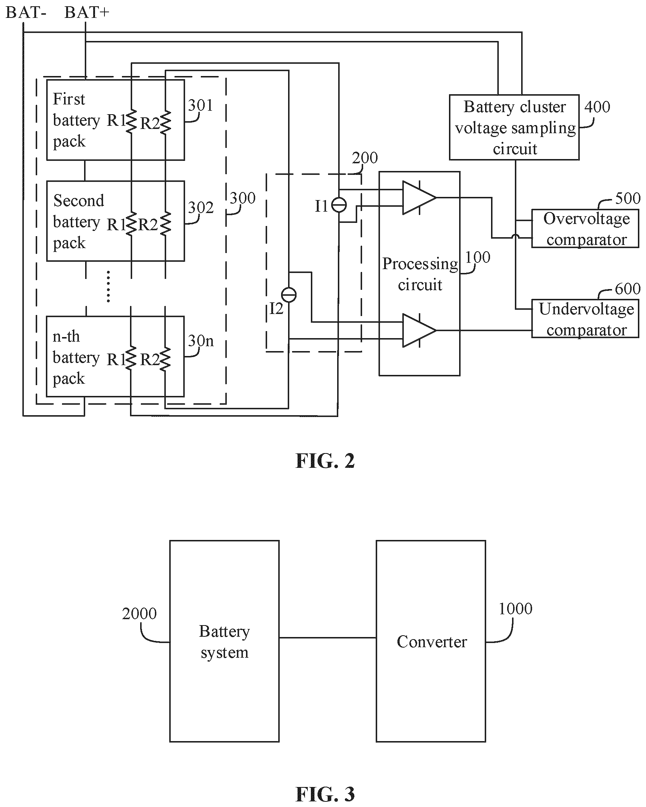

Referring to FIG. 2, FIG. 2 is a schematic diagram of a battery system according to another embodiment of the present disclosure.

The battery system according to the embodiment of the present disclosure includes the processing circuit 100, the constant current source 200, and the multiple battery packs 300, the multiple battery packs include the first battery pack 301, the second battery pack 302, and up to the n-th battery pack 30n, which is the same as the battery system in the above embodiment.

In an embodiment, each battery pack includes two sense resistors: a first sense resistor R1 and a second sense resistor R2. The constant current source 200 includes a first constant current source I1 and a second constant current source I2.

The first sense resistors R1 of all the battery packs are connected in series to form a branch, and the branch is connected to two terminals of the first constant current source I1.

The second sense resistors R2 of all the battery packs are connected in series to form a branch, and the branch is connected to two terminals of the second constant current source I2.

Two of four input terminals of the processing circuit 100 are connected to the two terminals of the first constant current source and the other two input terminals are connected to the two terminals of the second constant current source. The voltage across the first constant current source I1 is acquired as the overvoltage protection value, and the voltage across the second constant current source I2 is acquired as the undervoltage protection value. The acquired voltages are compared with the voltage of the multiple battery packs connected in series.

The battery system according to the embodiment of the present disclosure further includes a battery cluster voltage sampling circuit 400, an overvoltage comparator 500, and an undervoltage comparator 600.

A battery cluster includes multiple battery packs connected in series. The battery cluster voltage sampling circuit 400 samples a voltage between the positive electrode BAT+ and the negative electrode BAT- of the battery system.

Input terminals of the battery cluster voltage sampling circuit 400 are connected to two terminals of the multiple battery packs connected in series, respectively. An output terminal of the battery cluster voltage sampling circuit 400 is connected to a first input terminal of the overvoltage comparator 500 and a first input terminal of the undervoltage comparator 600. A second input terminal of the overvoltage comparator 500 and a second input terminal of the undervoltage comparator 600 are connected to the processing circuit.

The overvoltage comparator 500 and the undervoltage comparator 600 are configured to output comparison results, so that a protection circuit performs a protection operation in response to an overvoltage or an undervoltage of the battery system.

In an embodiment, the overvoltage comparator 500 and the undervoltage comparator 600 may send the comparison results to a microcontroller unit and a hardware protection circuit for logic processing and overvoltage/undervoltage protection.

The battery system according to the embodiment of the present disclosure includes two constant current sources, and each battery pack includes two sense resistors, so that both the overvoltage protection value and the undervoltage protection value are acquired. The battery system further includes the battery cluster voltage sampling circuit, the overvoltage comparator, and the undervoltage comparator, so that an actual voltage of the battery cluster can be compared with the two protection values in a real time manner, thereby protecting the battery system more comprehensively.

It should be understood that FIG. 2 is only a possible implementation, the constant current source in the battery system may include only the first constant current source, and the battery pack may include only the first sense resistor. In this case, the processing circuit is connected to the two terminals of the first constant current source, and acquires the voltage of the two terminals of the first constant current source as the overvoltage protection value or the undervoltage protection value, that is, only one of the protection values is acquired at a time. Accordingly, the battery system may further include the battery cluster voltage sampling circuit and the overvoltage comparator or the undervoltage comparator corresponding to the above-described function.

Based on the battery system described in the above embodiments, a power supply system is further provided according to another embodiment of the present disclosure, which is described below in detail in conjunction with the drawings.

Referring to FIG. 3, FIG. 3 is a schematic diagram of a power supply system according to an embodiment of the present disclosure.

The power supply system according to the embodiment of the present disclosure includes a converter 1000 and the battery system 2000 described in the above embodiments.

The converter 1000 is configured to charge and discharge the battery system 2000.

Detailed compositions and operation principles of the battery system 2000 may refer to the above embodiments, and thus are not repeated herein.

The power supply system according to the embodiment of the present disclosure includes a converter and a battery system. The battery system includes a constant current source, and each battery pack includes at least one sense resistor. The resistance value of the sense resistors and the current supplied by the constant current source together represent a voltage protection value corresponding to a certain number of battery packs. In the power supply system according to the embodiment of the present disclosure, it is unnecessary to open the switch box and to adjust the voltage protection value by using the DIP switch, which is more convenient and quicker, thereby improving safety and reducing installation costs.

It should be noted that the embodiments in this specification are described in a progressive manner. Each of the embodiments focuses on differences from other embodiments, and the same or similar parts of the embodiments may be referenced to each other.

Based on the above description of the disclosed embodiments, those skilled in the art can implement or carry out the present disclosure. Various modifications made to these embodiments are apparent to those skilled in the art. The general principle defined herein may be implemented in other embodiments without departing from the spirit or scope of the present disclosure. Therefore, the present disclosure shall not be limited to the embodiments described herein, but have the widest scope that complies with the principle and novelty disclosed in this specification.

## Claims

1. A battery system, comprising a processing circuit, a constant current source, and a plurality of battery packs, wherein:
each of the plurality of battery packs comprises at least one sense resistor;
the sense resistors of the plurality of battery packs are connected in series to form a branch and the branch is connected to two terminals of the constant current source; and
the processing circuit is connected to the two terminals of the constant current source, and is configured to acquire a voltage between the two terminals of the constant current source as a voltage protection value.

2. The battery system according to claim 1, further comprising a controller connected to the constant current source, wherein
the controller is configured to regulate a current supplied by the constant current source.

3. The battery system according to claim 1, wherein the constant current source comprises a first constant current source, wherein
each of the plurality of battery packs comprises a first sense resistor; and
the first sense resistors of the plurality of battery packs are connected in series to form a branch and the branch is connected to two terminals of the first constant current source.

4. The battery system according to claim 3, wherein the processing circuit is connected to the first constant current source, and is configured to:
acquire a voltage between the two terminals of the first constant current source as an overvoltage protection value; and
compare the acquired voltage with a voltage of the plurality of battery packs connected in series.

5. The battery system according to claim 4, further comprising a battery cluster voltage sampling circuit and an overvoltage comparator, wherein
input terminals of the battery cluster voltage sampling circuit are connected to two terminals of the plurality of battery packs connected in series, respectively, and an output terminal of the battery cluster voltage sampling circuit is connected to a first input terminal of the overvoltage comparator; and
a second input terminal of the overvoltage comparator is connected to the processing circuit.

6. The battery system according to claim 3, wherein the processing circuit is connected to the first constant current source, and is configured to:
acquire a voltage between the two terminals of the first constant current source as an undervoltage protection value; and
compare the acquired voltage with a voltage of the plurality of battery packs connected in series.

7. The battery system according to claim 6, further comprising a battery cluster voltage sampling circuit and an undervoltage comparator, wherein
input terminals of the battery cluster voltage sampling circuit are connected to the two terminals of the plurality of battery packs connected in series, respectively, and an output terminal of the battery cluster voltage sampling circuit is connected to a first input terminal of the undervoltage comparator; and
a second input terminal of the undervoltage comparator is connected to the processing circuit.

8. The battery system according to claim 5, wherein the constant current source further comprises a second constant current source, wherein:
each of the plurality of battery packs further comprises a second sense resistor;
the second sense resistors of the plurality of battery packs are connected in series to form a branch and the branch is connected to two terminals of the second constant current source; and
the processing circuit is connected to the second constant current source, and is further configured to:
acquire a voltage between the two terminals of the second constant current source as an undervoltage protection value; and
compare the acquired voltage with the voltage of the plurality of battery packs connected in series.

9. The battery system according to claim 8, further comprising an undervoltage comparator, wherein:
the output terminal of the battery cluster voltage sampling circuit is connected to a first input terminal of the undervoltage comparator; and
a second input terminal of the undervoltage comparator is connected to the processing circuit.

10. A power supply system, comprising a converter and the battery system according to any one of claims 1 to 9, wherein
the converter is configured to charge and discharge the battery system.
